Europäisches Patentamt

European Patent Office

Office européen des brevets

(11) Publication number: **0 254 295**
**A1**

# (12) EUROPEAN PATENT APPLICATION

(21) Application number: **87110618.3**

(22) Date of filing: **22.07.87**

(51) Int. Cl.4: **F16D 9/00 , B60H 1/32**

(30) Priority: **23.07.86 JP 111995/86 U**

(43) Date of publication of application:
**27.01.88 Bulletin 88/04**

(84) Designated Contracting States:
**DE FR GB IT SE**

(71) Applicant: **SANDEN CORPORATION**
**20 Kotobuki-cho**
**Isesaki-shi Gunma-ken(JP)**

(72) Inventor: **Kikuchi, Kazuto**
**8, Inui-cho Isesaki-shi**
**Gunma 372(JP)**

(74) Representative: **Prüfer, Lutz H., Dipl.-Phys.**
**Harthauser Strasse 25d**
**D-8000 München 90(DE)**

(54) **Coupling mechanism for compressor.**

(57) A coupling mechanism for a compressor of an
automotive air conditioning system is disclosed. The
coupling member comprises a pulley (14) which is
rotatably supported on the casing (10, 11) of the
compressor, a circular plate element (13) which is
fixed on the outer end portion of drive shaft (12) of
the compressor, and a plurality of cylindrical mem-
bers (18, 19). The cylindrical members (18, 19) are
fixedly disposed between the pulley (14) and the
plate element (13) to transmit the driving force. The
cylindrical members (13, 14) are made of materials
which are destroyed by high torque. Therefore, the
engine can be disconnected from the compressor, if
the compressor seizes.

Fig. 2

## COUPLING MECHANISM FOR COMPRESSOR

This invention relates to a coupling mechanism for a refrigerant compressor, and more particularly, to a mechanism for disconnecting the drive shaft of a compressor from a driving pulley, in the event the compressor causes trouble.

In the typical air conditioning system desired for use in an automotive application, an electromagnetic clutch is interposed between an automotive engine and the drive shaft of the compressor to intermittently transmit the rotating motion of an automotive engine to the drive shaft of the compressor. The transmission of the driving force to the compressor from the engine is intermittently controlled by the operation of the electromagnetic clutch. The operation of the electromagnetic clutch is controlled by the change of refrigerating condition of the air conditioning system, for example, change of temperature in the compartment.

In the event trouble is caused in the compressor, the clutch should operate to disconnect between the engine and the compressor so as to prevent transmitting the driving force from the engine. Therefore, the clutch is usually loaded on the compressor with a variable displacement mechanism. Because, the compressor can change its capacity by itself, therefore, the electromagnetic clutch is not necessary to function as to control the refrigerating condition of the air conditining system. But the compressor should be provided with some safety mechanism to prevent the troubles to any parts of automobile or air conditioning system. Thus, the installation of the clutch to the compressor causes high price.

One solution of the above-mentioned disadvantage is disclosed in U.S. Patent No 3,861,829. As shown in Figure 1, the compressor has a pulley 1 which is directly connected to the outer terminal end of a drive shaft 3 and extends around the outer peripheral surface of a tubular extension 2 thereof. Therefore, the driving force from the engine is always transmitted to drive shaft 3 of the compressor through pulley 1 via a drive belt (not shown). In the above construction, since pulley 1 is never disconnected to drive shaft 3, if the compressor causes trouble, a malfunction of the compressor is directly transmitted to the driving system of the automobile, and the engine and the other-like may be damaged.

It is a primary object of this invention to provide a coupling mechanism for a compressor which easily prevents the damage of the engine or other-like caused by a malfunction of the compressor.

It is another object of this invention to provide a coupling mechanism for a compressor which can be produced at low costs.

A coupling mechanism for a driven member in accordance with the present invention includes a pulley which is associated with the driven member. The pulley is rotatably disposed on an outer peripheral surface of the driven member. A circular plate element is affixed onto the outer end portion of a drive shaft of the driven member. A plurality of cylindrical members are disposed between an inner end surface of the plate element and an outer end surface of the pulley to be coupled therebetween. The cylindrical members are made of materials which are easily broken down due to a predetermined torque which may act on the pulley and plate element when the operation of the driven member is interrupted.

Further objects, features and other aspects of this invention will be understood from the following detailed description of preferred embodiments of this invention with reference to the annexed drawings.

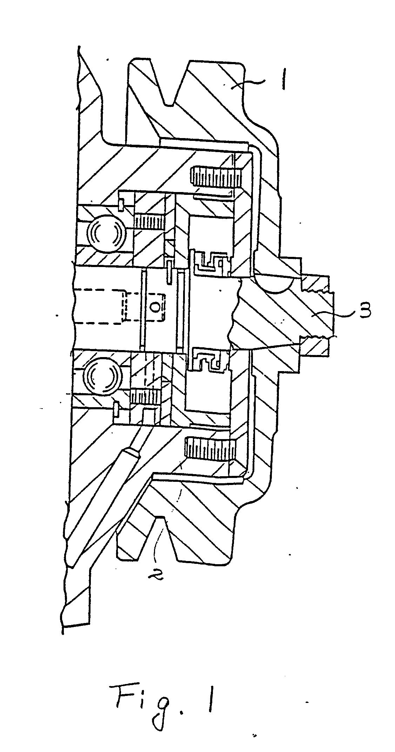

Fig. 1 is a cross-sectional view of a conventional coupling mechanism which is installed on a compressor.

Fig. 2 is a cross-sectional view of a coupling mechanism, which is installed on a compressor, in accordance with one embodiment of this invention.

Fig. 3(a) is a rear end view of a plate element of the coupling mechanism of Fig. 2.

Fig. 3(b) is a cross-sectional view taken along line A-A of Fig. 3(a).

Fig. 4(a) is a rear end view of a modified plate element of the coupling mechanism.

Fig. 4(b) is a cross-sectional view taken along line B-B of Fig. 4(a).

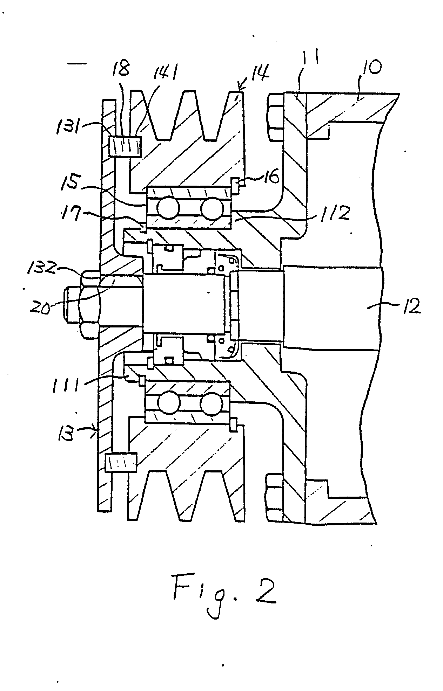

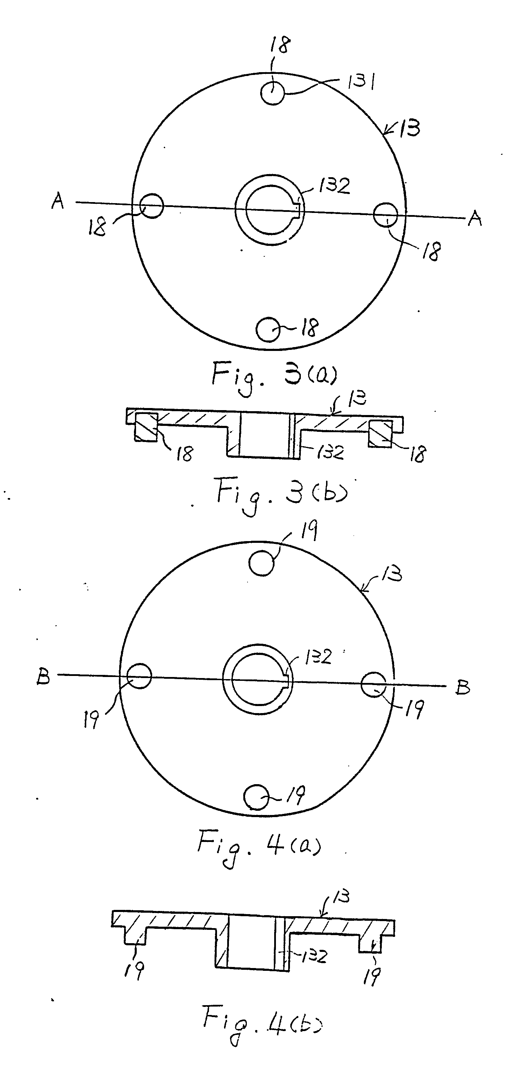

With reference to Figs. 2 and 3, the construction of a coupling mechanism, in accordance with one embodiment of this invention, is shown. This coupling mechanism is installed on a refrigerant compressor for an automobile air conditioning system. The compressor includes a compressor housing 10 and front end plate 11 which is attached to one end opening of the compressor housing 10. A drive shaft 12 is rotatably supported within front end plate 11. A tubular extension 111 axially outwardly extends from front end plate 11 for surrounding drive shaft 12. A pulley 14 is rotatably supported on the outer peripheral surface of tubular extension 111 through a bearing 15. Pulley 14 is securely fitted on the outer surface of bearing 15 and axial movement is prevented by a snap ring 16 disposed in the inner surface of pulley 14 to be adjacent the inner end surface of bearing 15. Bearing 15 is secured between flange portion 112 and a snap ring 17 which is fixed on the outer surface of tubular extension 111.

A circular plate element 13 is fixed on an outer terminal end portion of drive shaft 12 by a bolt-nut. Plate element 13 is also coupled with drive shaft 12 by a key and a key-groove 132. A plurality of cylindrical members 8 are disposed between the inner end surface of plate element 13 and the outer end surface of pulley 14 to be coupled therebetween, i.e., one end portion of each cylindrical member 18 is disposed in a hole 131 formed on the end surface of plate element 13 and the other end portion of the cylindrical member 18 is disposed in a hole 141 formed on the end surface of pulley 14. Alternatively, the cylindrical member 19 may be integrally formed with plate element 13, as shown in Fig. 4. The cylindrical members 18 are made of materials, for example, synthetic resin or metals, which are normally destroyed, if an abnormal torque acts on pulley 14 and plate element 13.

In this construction of coupling mechanism, the driving force of the engine is transmitted to pulley 14 via the belt, and then transferred to drive shaft 12 of the compressor through cylindrical members 18 and plate element 13. Thus, drive shaft 12 is driven.

During the operation of the compressor, if some troubles are caused in the compressor, and as a result, rotation of drive shaft 12 is interrupted, the rotating movement of plate element 13 is interrupted. However, pulley 14 is forcefully rotated by the engine, therefore, pulley 14 tries to rotate plate element 13. Thus, great torque acts onto cylindrical members 18. At that time, cylindrical members 18 are destroyed, because the cylindrical member 18 is formed to be destroyed when abnormal high torque is received. As a result, pulley 14 is in disconnection with rotatable plate 13, and the bad influence for damaging the parts is not transmitted to the driving system of the automobile or the air conditioning system.

The present invention has been described in connection with the preferred embodiments. However, the preferred embodiments are merely examples and the invention is not restricted thereto. It will be understood by those skilled in the art that variation and modification can be made within the scope of the present invention as defined by the appended claims.

## Claims

1. A coupling mechanism for driven apparatus comprising:
a pulley (14) rotatably supported on an outer surface of said driven apparatus,
a rotatable plate (13) associated with an outer end portion of a drive shaft (12) of said driven apparatus, and
a plurality of cylindrical members (18, 19) disposed between an inner side surface of said rotatable plate (13) and an outer side surface of said pulley (14), and made of materials which allow easily destroying due to acting of abnormal torque.

2. The coupling mechanism for driven apparatus of claim 1, wherein said cylindrical members (19) are integrally formed with said rotatable plate (13).

3. The coupling mechanism for driven apparatus of claim 1 or 2, wherein said cylindrical members (18, 19) are formed of synthetic resin.

Fig. 1

Fig. 2

Fig. 3 (a)

Fig. 3 (b)

Fig. 4 (a)

Fig. 4 (b)

## DOCUMENTS CONSIDERED TO BE RELEVANT

EP 87110618.3

| Category | Citation of document with indication, where appropriate, of relevant passages | Relevant to claim | CLASSIFICATION OF THE APPLICATION (Int. Cl.4) |
|---|---|---|---|
| X | GB - A - 1 520 416 (PRICE MILES). <br> * Fig. 1,3 * <br> -- | 1 | F 16 D 9/00 <br> B 60 H 1/32 |
| X | FR - A1 - 2 525 710 (CIT-ALCATEL) <br> * Totality * <br> -- | 1 | |
| A | FR - A1 - 2 260 718 (GENERAL MOTORS) <br> * Fig. * <br> -- | | |
| A | US - A - 3 016 252 (MITCHELL) <br> * Totality * <br> -- | | |
| A | US - A - 2 914 158 (ZEIDLER) <br> * Fig. 1 * <br> -- | | TECHNICAL FIELDS SEARCHED (Int. Cl.4) |
| A | US - A - 2 907 426 (JACOBS) <br> * Fig. * <br> ---- | | F 16 D <br> B 60 H |

The present search report has been drawn up for all claims

| Place of search | Date of completion of the search | Examiner |
|---|---|---|
| VIENNA | 06-10-1987 | PANGRATZ |